# EUROPÄISCHE PATENTANMELDUNG

(11) **EP 1 333 349 A2**
(43) Veröffentlichungstag der Anmeldung: **06.08.2003**
(21) Anmeldenummer: 03001392.4
(22) Anmeldetag: 27.01.2003
(51) Int. Cl.: G05D 16/20

(54) **Pneumatisches Druckregelventil mit integriertem Stellzeitbeschleuniger**

(30) Priorität: 31.01.2002 DE 10203793
(71) Anmelder: Rexroth Mecman GmbH, 30453 Hannover (DE)
(72) Erfinder: Meyer, Heinz-Hermann, Dipl.-Ing., 30926 Seelze (DE); Päth, Thomas, Dipl.-Ing., 1582 Nienburg (DE); Fassbender, Klaus, Dipl.-Ing., 30455 Hannover (DE)
(74) Vertreter: Maiwald Patentanwalts GmbH

(57) **Zusammenfassung**

Pneumatisches Druckregelventil, im wesentlichen bestehend aus einer mechanischen Ventileinrichtung (1) zum umschaltbaren Verbinden eines Arbeitsleitungsanschlusses (6) mit einem Speisedruckanschluss (7) oder einem Entlüftungsanschluss (8) mittels mindestens eines Schaltelements, das von mindestens einem je zugeordneten Elektromagneten (5a, 5b) betätigbar ist, der über eine Elektronikeinheit (2) elektrisch ansteuerbar ist, die entsprechend eines am Signaleingang (9) zugeführten Drucksollwerts pₛₒₗₗ den mittels eines Drucksensors (10) messbaren Druckistwert pᵢₛₜ am Arbeitsleitungsanschluss (6) ausregelt, wobei die Elektronikeinheit (2) Mittel zum Überhöhen des vorgegebenen Drucksollwerts pₛₒₗₗ um einen definierten Zusatzwert p_{zus} für eine definierte Zeitdauer t_{zus} aufweist, um eine kurze Stellzeit tₛₜₑₗₗ zur Ausregelung des Drucksollwerts pₛₒₗₗ zu erzielen.

## Beschreibung

Die vorliegende Erfindung betrifft ein pneumatisches Druckregelventil, welches im wesentlichen aus einer mechanischen Ventileinrichtung zum umschaltbaren Verbinden eines Arbeitsleitungsanschlusses mit einem Speisedruckanschluss oder einem Entlüftungsanschluss mittels mindestens eines Schaltelements besteht, das von mindestens einem je zugeordneten Elektromagneten betätigbar ist, der über eine Elektronikeinheit elektrisch ansteuerbar ist, die entsprechend eines am Signaleingang zugeführten Drucksollwerts pₛₒₗₗ den mittels eines Drucksensors messbaren Druckistwert pᵢₛₜ am Arbeitsleitungsanschluss ausregelt.

Derartige pneumatische Druckregelventile werden in der Praxis beispielsweise dafür eingesetzt, einen Druckbehälter auf einen konstanten, dem Druckregelventil vorgegebenen Sollwert zu halten. Pneumatische Druckregelventile kommen aber auch im Zusammenwirken mit Druckmittelzylindern zum Einsatz, um auf die vom Druckmittelzylinder erzeugte Kraft Einfluss zu nehmen. Ein bevorzugtes Einsatzfeld pneumatischer Druckregelventile ist die Fahrzeugtechnik, wo Druckregelventile im Rahmen von pneumatischen Bremssystemen verwendet werden. Pneumatische Druckregelventile werden allgemein überall dort eingesetzt, wo von einer elektrischen Steuerung aus direkt auf eine Druck- oder Kraftveränderung Einfluss genommen werden soll. Es wird gewöhnlich ein elektrisches Signal in Form eines elektrischen Stroms, einer elektrischen Spannung oder eines elektrischen Widerstands proportional in einen Druck umgewandelt.

Ein gattungsgemäßes pneumatisches Druckregelventil ist aus dem Produktkatalog "Know-how in Pneumatics" (Rexroth Mecman GmbH, Druck Nr. 00010 006 01, Auflage 1998, Seite 7.29) bekannt. Die mechanische Ventileinrichtung dieses Druckregelventils ist nach Art eines Sitzventils ausgebildet, welches einen am Ventilgehäuse angeordneten Arbeitsleitungsanschluss je nach auszuregelnder Stellgröße entweder mit einem ebenfalls am Ventilgehäuse angeordneten Speisedruckanschluss oder einem Entlüftungsanschluss verbindet. Eine dementsprechende Betätigung des Ventils erfolgt hier über zwei getrennte 2/2-Wegeventile, deren Elektromagneten von einer Elektronikeinheit aus angesteuert werden, welche ebenfalls in das Druckregelventil integriert ist. Die Elektronikeinheit führt die Druckregelung durch. Eingangsseitig wird zu diesem Zwecke von einer übergeordneten Steuerung her der Drucksollwert pₛₒₗₗ zugeführt. Über einen im Druckregelventil arbeitsleitungsseitig angeordneten Drucksensor wird der Druckistwert pᵢₛₜ gemessen und ebenfalls der Elektronikeinheit eingangsseitig zugeführt. Diese führt die Druckregelung ausgehend von diesen Parametern im eingangs erläuterten Sinne durch.

Ein Nachteil der herkömmlichen Druckregelung besteht darin, dass insbesondere bei einer Ausregelung geringer Druckdifferenzen eine relativ lange Stellzeit vergeht, ehe der gewünschte Drucksollwert erreicht ist. Wird bei einem herkömmlichen pneumatischen System dem Druckregelventil ein Sollwertsprung vorgegeben, so öffnet die Ventileinrichtung solange, bis dieser Drucksollwert erreicht ist. Bei relativ geringen Sollwertsprüngen öffnet die Ventileinrichtung nicht vollständig sondern nur zu einem Teil, was in der Proportionalcharakteristik des Druckregelventils begründet liegt. Hierdurch verlängert sich jedoch die Stellzeit.

Der Erfindung liegt daher die Aufgabe zugrunde, ein pneumatisches Druckregelventil der vorstehend beschriebenen Art dahingehend weiter zu verbessern, dass mit einfachen Maßnahmen eine Verkürzung der Stellzeit, insbesondere bei nur geringem Sollwertsprüngen, erzielt wird.

Die Aufgabe wird ausgehend von einem pneumatischen Druckregelventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die dem pneumatischen Druckregelventil zugeordnete Elektronikeinheit Mittel zum Überhöhen des vorgegebenen Drucksollwerts pₛₒₗₗ um einen definierten Zusatzwert p_{zus} für eine definierte Zeitdauer t_{zus} aufweist, um eine kurze Stellzeit tₛₜₑₗₗ zur Ausregelung des Drucksollwerts pₛₒₗₗ zu erzielen.

Der Vorteil der erfindungsgemäßen Lösung liegt insbesondere darin, dass mittels nur einer geringfügigen schaltungstechnischen Änderung innerhalb der Elektronikeinheit des Druckregelventils die angestrebte kurzzeitige Überhöhung des Drucksollwerts erreichbar ist. Versuche haben ergeben, dass bei der Wahl eines optimalen Zusatzdruckwertes p_{zus} eine Stellzeitverkürzung von ca. 30% möglich ist. Durch diese Stellzeitverkürzung können durch das Druckregelventil Sollwertsprünge höherer Frequenz ausgeregelt werden. Somit können beispielsweise die mit dem erfindungsgemäßen Druckregelventil ausgerüsteten pneumatischen Systeme, wie Fertigungsanlagen, mit einer höheren Taktrate betrieben werden, was deren Ausnutzungsgrad erhöht.

Vorzugsweise umfasst die Elektronikeinheit einen Mikrocontroller zur Berechnung des Stellwerts für den Elektronmagneten, dem eingangsseitig der gemessene Druckistwert pᵢₛₜ sowie der vorgegebene Drucksollwert pₛₒₗₗ zugeht. Die erfindungsgemäße Zusatzfunktion zur Druckregelung ist durch Einsatz des Mikrocontrollers über eine entsprechende Programmierung der Betriebssoftware in einfacher Weise umsetzbar. Daneben ist es auch möglich, die erfindungsgemäße Zusatzfunktion hardwaretechnisch mittels einer entsprechenden elektronischen Schaltungsanordnung zu realisieren. Bei Verwendung eines Mikrocontrollers kann jedoch in vorteilhafter Weise der Zusatzwert p_{zus} sowie die zugeordnete Zeitdauer t_{zus} in einer zum Mikrocontroller gehörigen Speichereinheit abrufbar hinterlegt werden.

Der in der Speichereinheit hinterlegte Zusatzwert p_{zus} sowie die zugeordnete Zeitdauer t_{zus} sind beispielsweise über eine externe Schnittstelle eingebbar und änderbar. Als externe Schnittstelle eignet sich eine nach dem RS232-Standard ausgeführte Schnittstelle zur seriellen Datenübertragung. Hierüber ist eine Veränderung der Parameter Zusatzwert p_{zus} und Zeitdauer t_{zus} als Wertepaar auch während des Betriebs der Druckregelung vornehmbar, so dass von einer übergeordneten Steuerung aus, welche auch die Sollwertsprünge vorgibt, entsprechend angepasste Werte für die erfindungsgemäße Stellzeitbeschleunigung ausgegeben werden können.

Gemäß einer weiteren die Erfindung verbessernden Maßnahme alternativ zu der vorstehend vorgeschlagenen Variante ist es auch möglich, die Überhöhung des vorgegebenen Drucksollwerts pₛₒₗₗ mittels eines Schalters oder eines entsprechenden Schaltsignals ein- und ausschaltbar zu gestalten, so dass die erfindungsgemäße Zusatzfunktion je nach den Einsatzrandbedingungen des pneumatischen Druckregelventils wählbar ist. Mittels weiterer Schalter kann auch eine Veränderung der Wertepaare erfolgen.

Weitere die Erfindung verbessernde Maßnahmen werden nachstehend gemeinsam mit der Beschreibung eines bevorzugten Ausführurigsbeispiels der Erfindung anhand der Figuren näher dargestellt. Es zeigt:
- Fig. 1: ein schematisches Blockschaltbild eines pneumatischen Druckregelventils, dessen Elektronikeinheit einen Mikrocontroller umfasst, und
- Fig. 2: eine graphische Darstellung der Ausregelung des Drucksollwerts pₛₒₗₗ über die Stellzeit tₛₜₑₗₗ in Form eines Druck-Zeit-Diagramms.

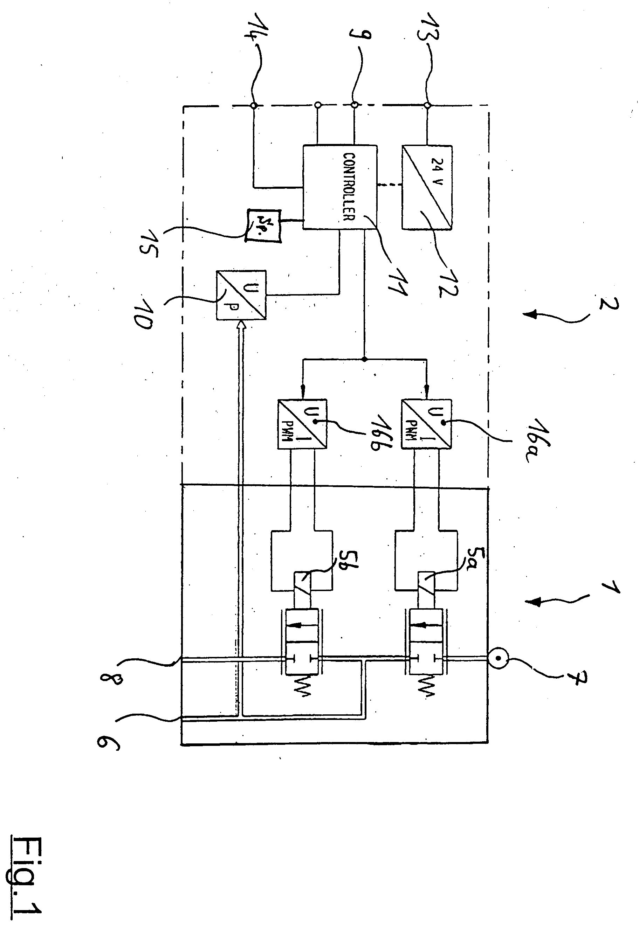

Das pneumatische Druckregelventil nach Fig. 1 besteht im wesentlichen aus einer mechanischen Ventileinrichtung 1 sowie einer Elektronikeinheit 2. Die mechanische Ventileinrichtung 1 umfasst ein Belüftungsventil 3 sowie ein Entlüftungsventil 4, die beide nach Art eines 2/2-Wegeventils ausgebildet sind und je über einen federrückgestellten Elektromagneten 5a bzw. 5b betätigbar sind. Das Belüftungsventil 3 verbindet einen Arbeitsanschluss 6 des pneumatischen Druckregelventils mit einem Speisedruckanschluss 7; mit dem Entlüftungsventil 4 ist der Arbeitsleitungsanschluss 6 mit einem Entlüftungsanschluss 8 verbindbar. Über eine entsprechend koordinierte wechselseitige Betätigung des Belüftungsventils 3 oder des Entlüftungsventils 4 ist der Druck am Arbeitsleitungsanschluss 6 erhöhbar oder senkbar.

Die Ansteuerung der beiden Elektromagneten 5a und 5b erfolgt über die Elektronikeinheit 2, welche gemäß einer Druckregelung aufgrund eines am Signaleingang 9 zugeführten Drucksollwerts pₛₒₗₗ den mittels eines Drucksensors 10 am Arbeitsleitungsanschluss 6 gemessenen Druckistwert pᵢₛₜ ausregelt. Zur Berechnung des entsprechenden Stellwerts umfasst die Elektronikeinheit 2 einen Mikrocontroller 11, der über eine Spannungsversorgung 12 betrieben wird. Die Betriebsspannung wird der Spannungsversorgung 12 über einen externen Betriebsspannungsanschluss 13 zugeführt. Ferner ist der Mikrocontroller 11 eingangsseitig mit einer nach dem RS232-Standard ausgebildeten Schnittstelle 14 versehen, um eine Programmierung und dergleichen von einer übergeordneten Steuereinheit aus vornehmen zu können. Weiterhin steht der Mikrocontroller 11 mit einer Speichereinheit 15 in Verbindung, worin insbesondere das Regelungsprogramm und diverse Parameter abgespeichert sind. Ausgangsseitig liefert der Mikrocontroller die Ansteuersignale für die beiden Elektromagneten 5a und 5b, welche über jeweils zugeordnete Treiberstufen 16a und 16b aufbereitet werden.

Der Mikrocontroller 11 der Elektronikeinheit 2 regelt den am Arbeitsleitungsanschluss 6 herrschenden Druckistwert pᵢₛₜ entsprechend des über den Signaleingang 9 vorgegebenen Drucksollwert pₛₒₗₗ aus. Innerhalb des Mikrocontrollers 11 wird der vorgegebene Drucksollwert pₛₒₗₗ über eine definierte Zeitdauer t_{zus} um einen definierten Zusatzwert p_{zus} überhöht, um eine möglichst kurze Stellzeit tₛₜₑₗₗ zur Ausregelung des Drucksollwerts pₛₒₗₗ zu erzielen. Die beiden Parameter Zusatzwert p_{zus} sowie Zeitdauer t_{zus} sind in der Speichereinheit 15 abrufbar hinterlegt.

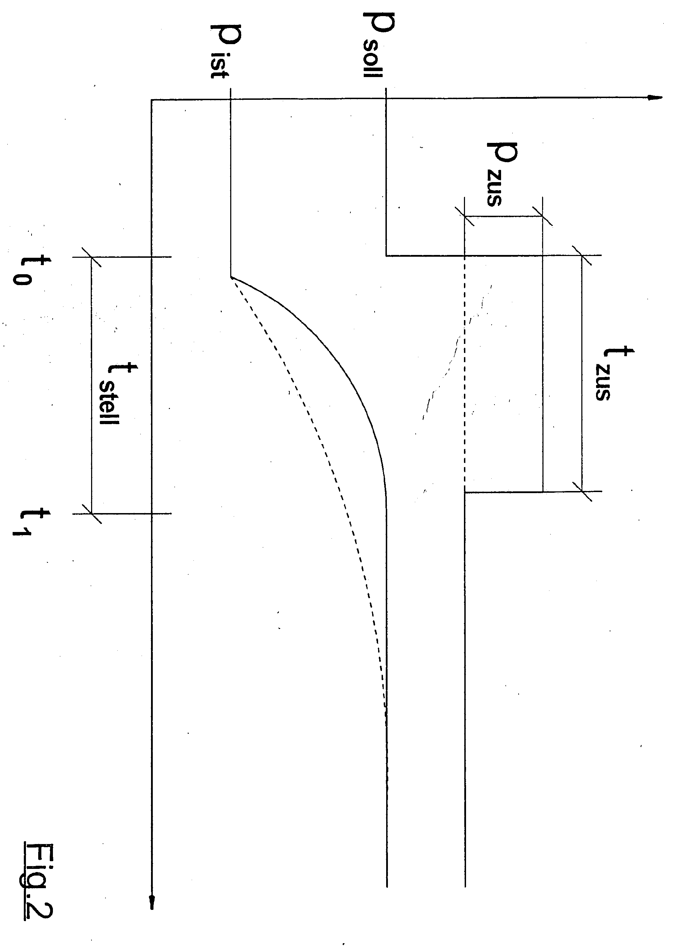

Gemäß der graphischen Darstellung nach Fig. 2 wird zu einem Zeitpunkt t₀ durch einen Sollwertsprung ein Drucksollwert pₛₒₗₗ vorgegeben. Dieser wird während der Zeitdauer t_{zus} um den Zusatzwert p_{zus} überhöht, so dass das proportional arbeitende Druckregelventil kurzzeitig einen höheren Durchlass als durch den Drucksollwert pₛₒₗₗ vorgegeben ermöglicht. Die frei definierbaren Parameter Zusatzwert p_{zus} sowie Zeitdauer t_{zus} sind von der Hystherese des Gesamtsystems abhängig und insoweit durch Versuche oder Berechnungen zu ermitteln und entsprechend änderbar.

Die Erfindung ist nicht beschränkt auf die vorstehend beschriebene Ausführungsform. Es sind vielmehr auch Abwandlungen hiervon denkbar, die vom beanspruchten Schutzbereich Gebrauch machen. Insbesondere ist die vorliegende Erfindung nicht auf Druckregelventile beschränkt, deren mechanische Ventileinrichtung ein separates Belüftungsventil sowie ein separates Entlüftungsventil umfassen. Dieselbe Funktionalität kann auch über ein 3/2-Wegeventil oder andere geeignete Ventilfunktionen umgesetzt werden.

### Bezugszeichenliste

- **1**: Ventileinrichtung
- **2**: Elektronikeinheit
- **3**: Belüftungsventil
- **4**: Entlüftungsventil
- **5**: Elektromagnet
- **6**: Arbeitsleitungsanschluss
- **7**: Speisedruckanschluss
- **8**: Entlüftungsanschluss
- **9**: Signaleingang
- **10**: Drucksensor
- **11**: Mikrocontroller
- **12**: Spannungsversorgung
- **13**: Betriebsspannungsanschluss
- **14**: Schnittstelle
- **15**: Speichereinheit
- **16**: Treiberstufe

- pₛₒₗₗ: Drucksollwert
- pᵢₛₜ: Istwert
- p_{zus}: Zusatzwert
- t_{zus}: Zeitdauer
- tₛₜₑₗₗ: Stellzeit

## Patentansprüche

1. Pneumatisches Druckregelventil im wesentlichen bestehend aus einer mechanischen Ventileinrichtung (1) zum umschaltbaren Verbinden eines Arbeitsleitungsanschlusses (6) mit einem Speisedruckanschluss (7) oder einem Entlüftungsanschluss (8) mittels mindestens eines Schaltelements, das von mindestens einem je zugeordneten Elektromagneten (5a, 5b) betätigbar ist, der über eine Elektronikeinheit (2) elektrisch ansteuerbar ist, die entsprechend eines am Signaleingang (9) zugeführten Drucksollwerts Pₛₒₗₗ den mittels eines Drucksensors (10) messbaren Druckistwert pᵢₛₜ am Arbeitsleitungsanschluss (6) ausregelt,
**dadurch gekennzeichnet, dass** die Elektronikeinheit (2) Mittel zum Überhöhen des vorgegebenen Drucksollwerts pₛₒₗₗ um einen definierten Zusatzwert p_{zus} für eine definierte Zeitdauer t_{zus} aufweist, um eine kurze Stellzeit tₛₜₑₗₗ zur Ausregelung des Drucksollwerts pₛₒₗₗ zu erzielen.

2. Pneumatisches Druckregelventil nach Anspruch 1,
**dadurch gekennzeichnet, dass** die Elektronikeinheit(2) einen Mikrocontroller (11) zur Berechnung des Stellwerts für den Elektromagneten (5a, 5b) umfasst, dem eingangsseitig der gemessene Druckistwert pᵢₛₜ sowie der vorgegebene Drucksollwert pₛₒₗₗ zugeht.

3. Pneumatisches Druckregelventil nach Anspruch 2,
**dadurch gekennzeichnet, dass** der Zusatzwert p_{zus} sowie die zugeordnete Zeitdauer t_{zus} in einer zum Mikrocontroller (11) gehörigen Speichereinheit (15) abrufbar hinterlegt sind.

4. Pneumatisches Druckregelventil nach Anspruch 3,
**dadurch gekennzeichnet, dass** der in der Speichereinheit (15) hinterlegte Zusatzwert p_{zus} sowie die zugeordnete Zeitdauer t_{zus} über eine externe Schnittstelle (14) frei veränderbar sind.

5. Pneumatisches Druckregelventil nach Anspruch 4,
**dadurch gekennzeichnet, dass** die Veränderung während des Betriebs der Druckregelung vornehmbar ist.

6. Pneumatisches Druckregelventil nach Anspruch 1,
**dadurch gekennzeichnet, dass** die Überhöhung des vorgegebenen Drucksollwerts pₛₒₗₗ mittels eines Schalters oder eines entsprechenden Schaltsignals ein- und ausschaltbar ist.

7. Pneumatisches Druckregelventil nach Anspruch 1,
**dadurch gekennzeichnet, dass** der Zusatzwert p_{zus} sowie die zugeordnete Zeitdauer t_{zus} mittels Schalter manuell veränderbar sind.

8. Verfahren zum Betrieb eines pneumatischen Druckregelventils nach einem der vorstehenden Ansprüche, bei dem entsprechend eines vorgegebenen Drucksollwerts pₛₒₗₗ der Druckistwert pᵢₛₜ ausgeregelt wird, wobei der vorgegebene Drucksollwert pₛₒₗₗ um einen definierten Zusatzwert p_{zus} für eine definierte Zeitdauer t_{zus} überhöht wird, um eine kurze Stellzeit tₛₜₑₗₗ zur Ausregelung des Drucksollwerts pₛₒₗₗ zu erzielen.

9. Verfahren nach Anspruch 7,
**dadurch gekennzeichnet, dass** der Zusatzwert p_{zus} sowie die zugeordnete Zeitdauer t_{zus} abrufbar und/oder änderbar abgespeichert wird.
